# EUROPEAN PATENT APPLICATION

(11) **EP 3 748 547 A1**
(43) Date of publication of application: **09.12.2020**
(21) Application number: 19216860.7
(22) Date of filing: 17.12.2019
(51) Int. Cl.: G06N 3/04, G06N 3/08

(54) **SUPER NETWORK TRAINING METHOD AND DEVICE**

(30) Priority: 06.06.2019 CN 201910492314
(71) Applicant: Beijing Xiaomi Intelligent Technology Co., Ltd., Beijing 100085 (CN)
(72) Inventor: CHU, Xiangxiang, Beijing, Beijing 100085 (CN); XU, Ruijun, Beijing, Beijing 100085 (CN); ZHANG, Bo, Beijing, Beijing 100085 (CN); LI, Jixiang, Beijing, Beijing 100085 (CN); LI, Qingyuan, Beijing, Beijing 100085 (CN)
(74) Representative: dompatent von Kreisler Selting Werner - Partnerschaft von Patent- und Rechtsanwälten mbB

(57) **Abstract**

A super network training method includes: performing (201) sub-network sampling on a super network for multiple rounds to obtain a plurality of sub-networks, wherein for any layer of the super network, different sub-structures are selected when sampling different sub-networks, and training the plurality of sub-networks obtained by sampling and updating the super network (203).

## Description

### TECHNICAL FIELD

The present disclosure relates to intelligent neural network technologies, and in particular, to a super network training method and device.

### BACKGROUND

Neural networks are widely used in various fields. In some fields, such as neural architecture search (NAS), a method in which each search generates and trains a separate neural network so as to obtain indicators encounters low evaluation efficiency, which greatly limits the speed of the search algorithm. Some NAS methods train a super network that contains all the search network structure space. A super network may also be referred to as a hypernetwork. All sub-structures in the super network share parameters when constructing different sub-networks. A sub-network can be sampled and evaluated only by training the super-network to a certain degree where there is no need to train the sub-network again.

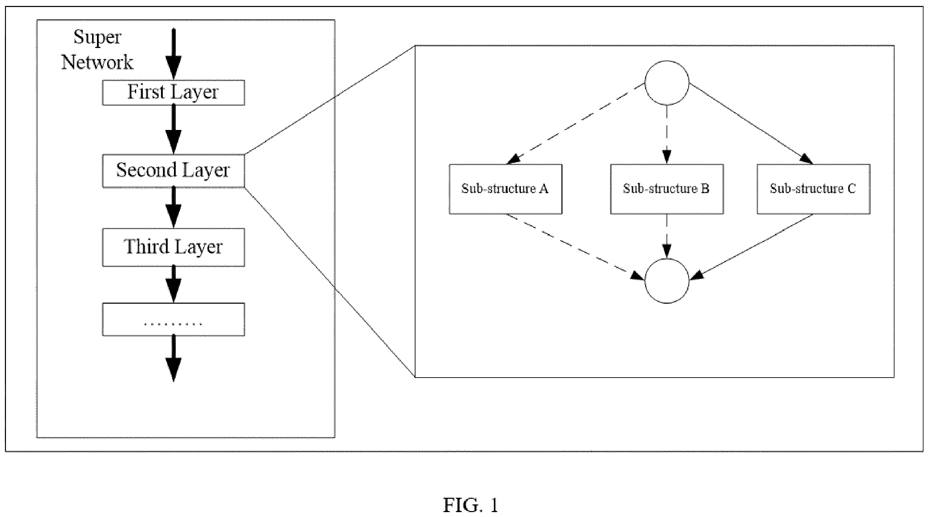

Each layer of the super network has multiple selectable sub-structures. The super network is trained usually by selecting a single training path through a uniform path sampling method, as shown in FIG. 1, which is an implementation example of uniformly sampling sub-networks. Due to the existence of a certain variance in uniform sampling, different sub-structures are trained at different degrees, which may lead to errors in evaluating sub-network indicators.

### SUMMARY

The present disclosure provides a super network training method and device.

According to a first aspect of the disclosure, a super network training method includes: performing sub-network sampling on a super network for multiple rounds to obtain a plurality of sub-networks, wherein for any layer of the super network, different sub-structures are selected when sampling different sub-networks; and training the plurality of sub-networks obtained by sampling and updating the super network.

In an embodiment, a number of the sampled sub-networks is as the same as a number of sub-structures in each layer of the super network.

In an embodiment, performing sub-network sampling on the super network for the multiple rounds includes:
in step 1, from a first layer to a last layer of the super network, selecting (2011) a sub-structure from a sampling pool of each layer in a manner of layer by layer, the selected sub-structure being no longer put back into the sampling pool;
in step 2, connecting (2012) the sub-structures selected from each layer to form a sub-network; and
repeating the step 1 and the step 2 to obtain the plurality of sub-networks.

In an embodiment, when a number of the sampled sub-networks is as the same as a number of sub-structures in each layer of the super network, after performing sub-network sampling on the super network for the multiple rounds to obtain the plurality of sub-networks, the method further includes:
putting all sub-structures of all layers of the super network back to the sampling pools of the respective layers.

In an embodiment, training the plurality of sub-networks obtained by sampling and updating the super network includes:
training the plurality of sub-networks for one round; and
updating parameters of the super network according to a result of training the plurality of sub-networks.

In an embodiment, training the plurality of sub-networks for one round includes:
training the plurality of sub-networks through a back propagation (BP) algorithm.

According to a second aspect of the disclosure, an apparatus for training a super network includes:
a non-putting-back sampling module, configured to perform sub-network sampling on a super network for multiple rounds to obtain a plurality of sub-networks, wherein for any layer of the super network, different sub-structures are selected when sampling different sub-networks; and
a super network training module, configured to train the plurality of sub-networks obtained by sampling and update the super network.

In an embodiment, the non-putting-back sampling module includes:
a selecting submodule, configured to, from a first layer to a last layer of the super network, take out one sub-structure from a sampling pool of each layer in a manner of layer by layer, the taken-out sub-structure being no longer put back into the sampling pool;
a sub-network combining submodule, configured to, connect the sub-structures selected from each layer to form one sub-network; and
a sampling control submodule, configured to control the selecting submodule and the sub-network combining submodule to repeat the sampling and forming the sub-network, so as to obtain the plurality of sub-networks.

In an embodiment, the apparatus further includes:
a network releasing module, configured to, when a number of the sub-networks sampled by the non-putting-back sampling module is as the same as a number of the sub-structures in each layer of the super network, put all the sub-structures of all the layers of the super network back to the corresponding sampling pool of the respective layers.

According to a third aspect of the disclosure, a computer device includes: a processor; and a memory for storing instructions executable by the processor; wherein the processor is configured to: perform sub-network sampling on a super network for multiple rounds to obtain a plurality of sub-networks, wherein for any layer of the super network, different sub-structures are selected when sampling different sub-networks; and train the plurality of sub-networks obtained by sampling and update the super network.

According to a fourth aspect of the present disclosure, a non-transitory computer readable storage medium has stored thereon instructions that, when executed by a processor of a device, cause the device to perform a super network training method, the method including: performing sub-network sampling on a super network for multiple rounds to obtain a plurality of sub-networks, wherein for any layer of the super network, different sub-structures are selected when sampling different sub-networks; and training the plurality of sub-networks obtained by sampling and updating the super network.

The technical solution provided by the embodiments of the present disclosure can have the following beneficial effects: through using a completely fair sampling method, in the selection of the sub-structure of each layer, the sampled sub-structure is not put back when selecting a sub-structure from each layer, thereby ensuring that each sub-structure is uniformly selected and trained, and solving the problem that errors occur in evaluating the sub-networks due to different training degrees of sub-structures. Moreover, parameters of the super network are updated together after training the sub-network in batches, and the training efficiency is improved. Thus, an accurate and efficient super network training mechanism is realized.

It should be understood that the above general description and the following detailed description are merely illustrative and explanatory and cannot be construed as a limit to the present disclosure.

### BRIEF DESCRIPTION OF THE DRAWINGS

The accompanying drawings, which are incorporated in and constitute a part of the description, illustrate embodiments consistent with the present disclosure, and are used to explain the principles of the present disclosure in connection with the description.
FIG. 1 is a schematic diagram of an implementation principle of uniformly sampling a sub-network according to prior art.
FIG. 2 is a flowchart of a method for training a super network according to one exemplary embodiment.
FIG. 3 is a flowchart of step 201 in the method for training super network in FIG. 2.
FIG. 4 is a schematic diagram of an implementation principle of performing non-repetitive sampling in step 201 of FIG. 2, according to one exemplary embodiment.
FIG. 5 is a flowchart of a method for training a super network according to one exemplary embodiment.
FIG. 6 is a block diagram of a device for training a super network according to one exemplary embodiment.
FIG. 7 is a block diagram of the non-putting-back sampling module 601 in FIG. 6, according to one exemplary embodiment.
FIG. 8 is a block diagram of a device for training a super network according to one exemplary embodiment.
FIG. 9 is a block diagram of an apparatus for training a super network according to one exemplary embodiment.
FIG. 10 is a block diagram of an apparatus training a super network according to one exemplary embodiment.

### DETAILED DESCRIPTION

Exemplary embodiments will be described in detail herein, examples of which are illustrated in the accompanying drawings. Same reference numbers in different figures refer to same or similar elements unless otherwise indicated in the description. The embodiments described in the following exemplary embodiments do not represent all embodiments consistent with the invention. Instead, they are merely examples of devices and methods consistent with the invention as recited in the appended claims.

All sub-structures in a super network may share parameters when constructing different sub-networks, such that a sub-network can be sampled and evaluated as long as evaluating indexes (such as the accuracy) of sub-networks are trained to some degree, thus, there is no need to retrain the sub-network.

There are a plurality of sub-structures in each layer of the super network, and the super network is typically trained by selecting a single path through uniform sampling method. As described in the Background, due to variance in the uniform sampling, different sub-structures are trained at different degrees, which causes errors occur in evaluating index of the sub-networks.

The present disclosure provides a super network training method and device. A completely fair sampling method is utilized, and in the selection of the sub-structure of each layer, the sampled sub-structures are not put back when selecting a sub-structure from each layer, thereby ensuring that each sub-structure is uniformly selected and trained, and solving the problem that errors occur in evaluating the sub-networks due to non-uniform training degrees of sub-structures.

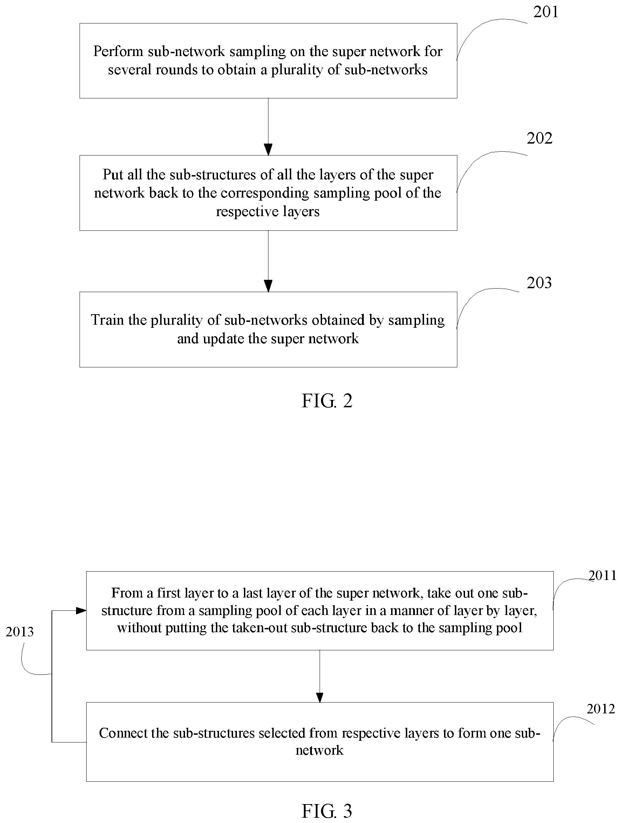

FIG. 2 is a flowchart of a method for training a super network according to an embodiment. The method may include the following steps.

In step 201, sub-network sampling is performed on the super network for multiple rounds to obtain a plurality of sub-networks, wherein for any layer of the super network, different sub-structures are selected when sampling different sub-networks.

In the embodiment, non-repetitive resampling is performed. The selected sub-structure is no longer put back into the sampling pool until all samplings of the sub-network are completed. In an embodiment, the number of the sampled sub-networks is as same as the number of sub-structures in each layer of the super network, that is, all the sub-structures in the super network are sampled once, thereby guaranteeing that all the sub-structures are uniformly trained.

FIG. 3 is a flowchart of step 201 for training a super network according to an embodiment. Step 201 may further include the following steps.

In step 2011, from a first layer to a last layer of the super network, a sub-structure is selected from a sampling pool of each layer in a manner of layer by layer, and the selected sub-structure is no longer put back into the sampling pool.

In step 2012, the sub-structures selected from each layer are connected to form a sub-network.

Steps 2011 and 2012 may be repeated to obtain a plurality of sub-networks. In an embodiment, step 201 may be completed until the number of sub-networks obtained by sampling is same as the number of sub-structures in each layer of the super network.

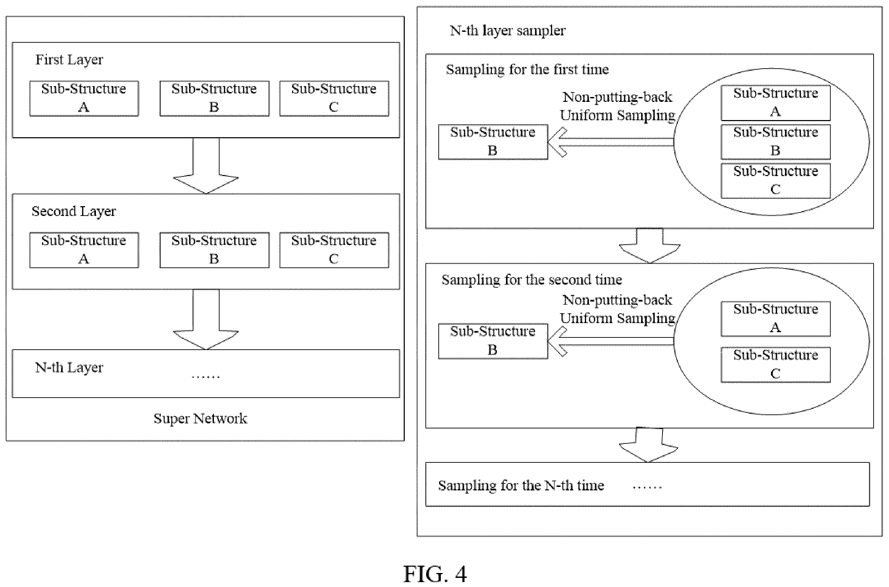

FIG. 4 is a schematic diagram of an implementation principle of performing non-repetitive sampling in step 201 according to an embodiment. Referring to FIG. 4, among N (N is a positive integer) layers of the super network, each layer is uniformly sampled without putting back the samples, ensuring that each of the sub-structures will be sampled once and no sub-structure will be sampled twice. For example, when sampling is performed on the N-th layer, sub-structure B is selected during the sampling for the first time without being put back into the sampling pool, and sub-structure A is selected during the sampling for the second time without being put back into the sampling pool.

Referring back to FIG. 2, in step 202, all the sub-structures of all the layers of the super network are put back to the sampling pools of the respective layers.

In a case that the number of the sampled sub-networks is the same as the number of sub-structures in each layer of the super network (then, each of the sub-structures is sampled once, and the sampling pool corresponding to the respective layer of the super network is empty), after performing sub-network sampling on the super network for multiple rounds to obtain the plurality of sub-networks, all the sub-structures of all the layers of the super network is put back to the respective sampling pools of the corresponding layers, for next-round training on the neural network super network.

In step 203, the plurality of sub-networks obtained by sampling are trained and the super network is updated.

In this step, each sub-network of the plurality of sub-networks is trained once. And more particularly, each sub-network of the plurality of sub-networks can be trained through a back propagation (BP) algorithm, and then, parameters of the super network, such as weights of the neural network, may be updated according to the result of training each sub-network in the plurality of sub-networks.

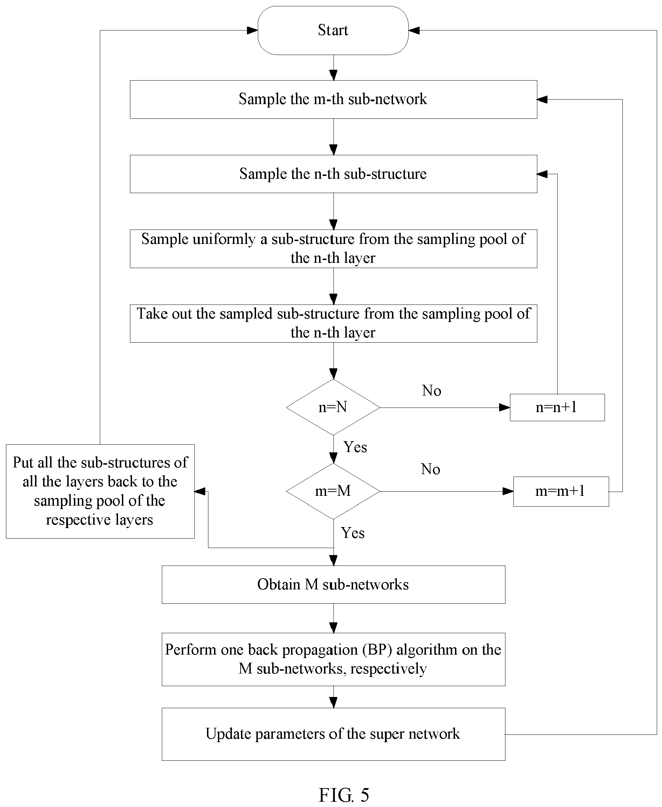

FIG. 5 is a flow chart of a super network training method according to another embodiment. In the embodiment, the super network is composed of N layers, and each layer has M selectable sub-structures. The goal is to perform M-rounds sampling to obtain M sub-networks, and train the M sub-networks in batches, wherein M and N are positive integers.

First, selecting a sub-structure from each layer (502) without putting the sub-structure back to the layer. Starting from the first layer, after sampling each layer (504-508), the value of n is increased by 1 until the N-th layer (that is, n=N), indicating that one round of sampling ends, and one sub-structure is selected from each layer, which can form a sub-network.

And then, judging how many sub-networks are sampled and whether a number of the sampled sub-networks reaches M (that is, m=M), which is a target. After the M sub-networks have been sampled, all sub-structures of all layers are put back into the sampling pool (510); otherwise, the value of m is increased by 1, for the next round of sub-network sampling.

After sampling on the N layers, the sub-networks selected from each layer are connected so as to form a sampled sub-network.

Repeat network sampling for M rounds so as to obtain a batch of M sub-networks (512). Each of the M sub-networks is trained through a back propagation algorithm (514), and after the trainings, parameters of the super network is updated once (516).

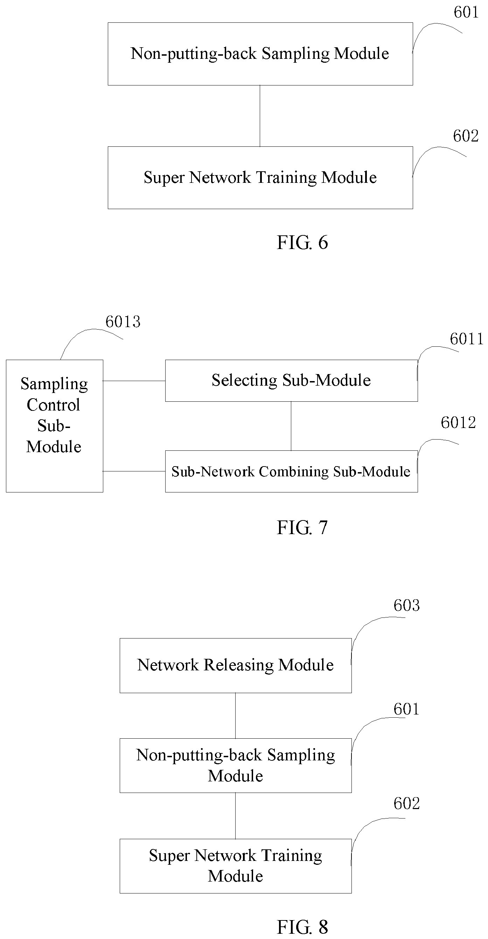

FIG. 6 is a block diagram of a super network training device according to an embodiment. As illustrated in FIG. 6, the device includes: a non-putting back sampling module 601, configured to perform sub-network sampling on a super network for multiple rounds to obtain a plurality of sub-networks, wherein for any layer of the super network, different sub-structures are selected when sampling different sub-networks; a super network training module, configured to train the plurality of sub-networks obtained by sampling and to update the super network.

In an embodiment, as illustrated in FIG. 7, the non-putting-back sampling module 601 includes: a selecting sub-module 6011, configured to select a sub-structure from a sampling pool of each layer from a first layer to a last layer of the super network in a manner of layer by layer, wherein the selected sub-structure is no longer put back to the sampling pool; a sub-network combining sub-module 6012, configured to connect the sub-structures selected from each layer to form a sub-network; and a sampling control sub-module 6013, configured to control the selecting sub-module 6011 to sample and control the sub-network combining sub-module 6012 to form the sub-network repeatedly, so as to obtain a plurality of sub-networks.

In an embodiment, as illustrated in FIG. 8, the device further includes a network releasing module 603, configured to: when the number of sub-networks sampled by the non-putting-back sampling module 601 is the same as the number of sub-structures in each layer of the super-network, put all the sub-structures of all the layers of the super-network back to the respective sampling pool of each layer.

With regard to the device in the above embodiments, the specific manner in which the respective modules perform the operations has been described in detail in the embodiment relating to the method, and will not be repeated herein. The super network training device illustrated in FIGS. 6 to 8 can be integrated into a computer device having processing capabilities, and the corresponding functions can be implemented by the computer device.

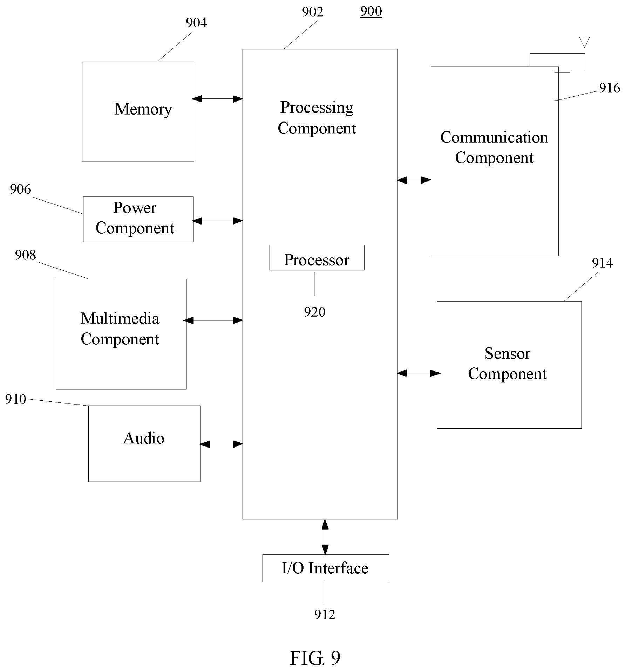

FIG. 9 is a block diagram of an apparatus 900 for super network training according to an embodiment. For example, the apparatus 900 can be a mobile phone, a computer, a digital broadcast terminal, a messaging device, a gaming console, a tablet device, a medical device, a fitness device, a personal digital assistant, and the like.

Referring to FIG. 9, the apparatus 900 can include one or more of the following components: a processing component 902, a memory 904, a power component 906, a multimedia component 908, an audio component 910, an input/output (I/O) interface 912, a sensor component 914, and a communication component 916.

The processing component 902 typically controls the overall operation of the apparatus 900, such as operations associated with display, telephone calls, data communications, camera operations, and recording operations. The processing component 902 can include one or more processors 920 to execute instructions to perform all or part of the steps described above. Moreover, the processing component 902 can include one or more modules to facilitate interaction between the processing component 902 and other components. For example, the processing component 902 can include a multimedia module to facilitate interaction between the processing component 902 and the multimedia component 908.

The memory 904 is configured to store various types of data to support operation at the apparatus 900. Examples of such data include any application or instructions run on the apparatus 900, contact data, phone book data, messages, pictures, videos, and the like. The memory 904 can be implemented by any type of volatile or non-volatile storage device, or a combination thereof, such as static random access memory (SRAM), electrically erasable programmable read only memory (EEPROM), erasable Programmable Read Only Memory (EPROM), Programmable Read Only Memory (PROM), Read Only Memory (ROM), Magnetic Memory, Flash Memory, magnetic disk or Optical Disk.

The power component 906 supplies power to various components of the apparatus 900. The power component 906 can include a power management system, one or more power sources, and other components associated with generating, managing, and distributing power for the apparatus 900.

The multimedia component 908 includes a screen between the apparatus 900 and the user that provides an output interface. In some embodiments, the screen can include a liquid crystal display (LCD) and a touch panel (TP). If the screen includes a touch panel, the screen can be implemented as a touch screen to receive input signals from the user. The touch panel includes one or more touch sensors to sense touches, slides, and gestures on the touch panel. The touch sensor can sense not only the boundary of the touch or sliding action, but also duration and pressure associated with the touch or sliding operation. In some embodiments, the multimedia component 908 includes a front camera and/or a rear camera. When the apparatus 900 is in an operation mode, such as a shooting mode or a video mode, the front camera and/or the rear camera can receive external multimedia data. Each of the front and rear camera can be a fixed optical lens system or have a focal length and optical zoom capabilities.

The audio component 910 is configured to output and/or input an audio signal. For example, the audio component 910 includes a microphone (MIC) that is configured to receive an external audio signal when device 900 is in an operational mode, such as a call mode, a recording mode, and a voice recognition mode. The received audio signal can be further stored in the memory 904 or transmitted via the communication component 916. In some embodiments, the audio component 910 further includes a speaker for outputting an audio signal.

The I/O interface 912 provides an interface between the processing component 902 and peripheral interface modules, which may be a keyboard, a click wheel, a button, or the like. These buttons can include, but are not limited to, a home button, a volume button, a start button, and a lock button.

The sensor component 914 includes one or more sensors for providing the apparatus 900 with status assessment in various aspects. For example, the sensor component 914 can detect an ON/OFF state of the apparatus 900, relative positioning of the components, such as the display and keypad of the apparatus 900. And the sensor component 914 can further detect a change in position of one component of the apparatus 900 or the apparatus 900, presence or absence of user contact with the apparatus 900, orientation or acceleration/deceleration of the apparatus 900, and change in temperature of the apparatus 900. The sensor component 914 can include a proximity sensor configured to detect presence of nearby objects without any physical contact. The sensor component 914 can further include a light sensor, such as a CMOS or CCD image sensor, for use in imaging applications. In some embodiments, the sensor component 914 can further include an acceleration sensor, a gyro sensor, a magnetic sensor, a pressure sensor, or a temperature sensor.

The communication component 916 is configured to facilitate wired or wireless communication between the apparatus 900 and other devices. The apparatus 900 can access a wireless network based on a communication standard, such as WiFi, 4G or 5G, or a combination thereof. In an exemplary embodiment, the communication component 916 receives broadcast signals or broadcast associated information from an external broadcast management system via a broadcast channel. In an exemplary embodiment, the communication component 916 further includes a near field communication (NFC) module to facilitate short range communication. In an exemplary embodiment, the communication component 916 can be implemented based on radio frequency identification (RFID) technology, infrared data association (IrDA) technology, ultra-wideband (UWB) technology, Bluetooth (BT) technology, and other technologies.

In an exemplary embodiment, the apparatus 900 can be implemented by one or more application specific integrated circuits (ASICs), digital signal processors (DSPs), digital signal processing devices (DSPDs), programmable logic devices (PLDs), field programmable gate array (FPGA), controller, microcontroller, microprocessor, or other electronic component implementation for performing the above methods.

In an exemplary embodiment, there is further provided a non-transitory computer readable storage medium including instructions, such as the memory 904 including instructions executable by the processor 920 of the apparatus 900 to perform the above described method. For example, the non-transitory computer readable storage medium can be a ROM, a random access memory (RAM), a CD-ROM, a magnetic tape, a floppy disk, and an optical data storage device.

A non-transitory computer readable storage medium is provided, and when instructions stored on the storage medium is executed by a processor of a device, the device performs a super network training method, the method including: performing sub-network sampling on a super network for multiple rounds to obtain a plurality of sub-networks, wherein for any layer of the super network, different sub-structures are selected when sampling different sub-networks; and training the plurality of sub-networks obtained by sampling and updating the super network.

An embodiment of the present disclosure further provides a computer device, including: a processor; and a memory for storing instructions executable by the processor; wherein the processor is configured to: perform sub-network sampling on a super network for multiple rounds to obtain a plurality of sub-networks, wherein for any layer of the super network, different sub-structures are selected when sampling different sub-networks; and train the plurality of sub-networks obtained by sampling and updating the super network.

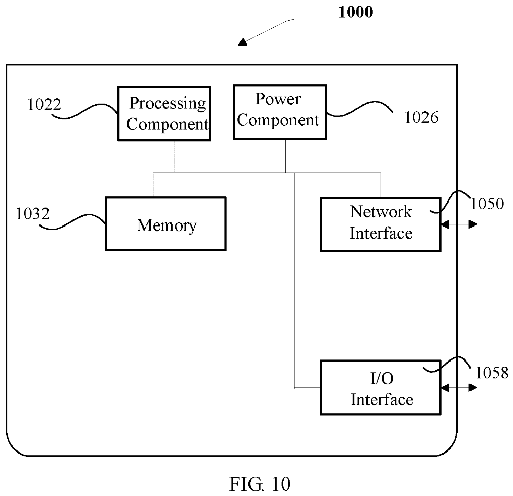

FIG. 10 is a block diagram of a super network training apparatus 1000 according to an embodiment. For example, the apparatus 1000 can be provided as a server. Referring to FIG. 10, the apparatus 1000 includes a processing component 1022, which may further include one or more processors, and memory resources represented by a memory 1032 for storing instructions executable by the processing component 1022, such as an application. The application stored in the memory 1032 can include one or more modules each corresponding to a set of instructions. Additionally, the processing component 1022 is configured to execute instructions to perform the methods described above.

The apparatus 1000 can further include a power component 1026 configured to perform power management for the apparatus 1000, a wired or wireless network interface 1050 configured to connect the apparatus 1000 to a network, and an input/output (I/O) interface 1058. The apparatus 1000 can be operated based on an operating system stored in the memory 1032, such as Windows Server™, Mac OS X™, Unix™, Linux™, FreeBSD™ or the like.

Embodiments of the present disclosure provide a super network training method and device, wherein sub-network samplings are performed on the super network for multiple rounds so as to obtain a plurality of sub-networks, for any layer of the super network, different sub-structures are selected when sampling different sub-networks, and then, the plurality of sub-networks obtained by sampling are trained and the super network is updated. A completely fair sampling method is utilized, and in the selection of the sub-structure of each layer, the sampled sub-structures are not put back when selecting a sub-structure from each layer, thereby ensuring that each sub-structure is uniformly selected and trained, and solving the problem that errors occur in evaluating the sub-networks due to non-uniform training degrees of sub-structures. Moreover, parameters of the super network parameters are updated together after training the sub-network in batches, and the training efficiency is improved. Thus, an accurate and efficient super network training mechanism is realized.

The technical solution provided by the embodiments of the present invention ensures that the training degrees of different sub-structures are the same, and the error in evaluating the sub-network indicators is minimized. And after back propagation of each batch of sub-networks, parameters are updated, thereby improving efficiency.

Other embodiments of the present disclosure will be apparent to one of ordinary skill in the art after considering the specification and practicing the embodiments disclosed herein. The present disclosure is intended to cover any variations, applications, or adaptive modifications of the present disclosure, which are in accordance with the general principles of the disclosure and include well-known knowledge or common technical means in the art that are not disclosed in the present disclosure. The specification and embodiments are merely illustrative, and the protection scope and the spirit of the present disclosure are set forth by the claims.

## Claims

1. A method for super network training, comprising:
performing (201) sub-network sampling on a super network for multiple rounds to obtain a plurality of sub-networks, wherein for any layer of the super network, different sub-structures are selected when sampling different sub-networks; and
training the plurality of sub-networks obtained by sampling and updating the super network (203).

2. The method according to claim 1, wherein a number of the sampled sub-networks is as the same as a number of sub-structures in each layer of the super network.

3. The method according to claim 1 or 2, wherein performing (201) sub-network sampling on the super network for the multiple rounds comprises:
in step 1, from a first layer to a last layer of the super network, selecting (2011) a sub-structure from a sampling pool of each layer in a manner of layer by layer, the selected sub-structure being no longer put back into the sampling pool;
in step 2, connecting (2012) the sub-structures selected from each layer to form a sub-network; and
repeating the step 1 and the step 2 to obtain the plurality of sub-networks.

4. The method according to claim 3, wherein when a number of the sampled sub-networks is as the same as a number of sub-structures in each layer of the super network, after performing (201) sub-network sampling on the super network for the multiple rounds to obtain the plurality of sub-networks, the method further comprises:
putting (202) all sub-structures of all layers of the super network back to the sampling pools of the respective layers.

5. The method according to claim 1, wherein training the plurality of sub-networks obtained by sampling and updating the super network (203) comprises:
training the plurality of sub-networks for one round; and
updating parameters of the super network according to a result of training the plurality of sub-networks.

6. The method according to claim 5, wherein training the plurality of sub-networks for one round comprises:
training the plurality of sub-networks through a back propagation (BP) algorithm.

7. An apparatus for training a super network, comprising:
a non-putting-back sampling module (601), configured to perform sub-network sampling on a super network for multiple rounds to obtain a plurality of sub-networks, wherein for any layer of the super network, different sub-structures are selected when sampling different sub-networks; and
a super network training module (602), configured to train the plurality of sub-networks obtained by sampling and update the super network.

8. The apparatus for training a super network according to claim 7, wherein the non-putting-back sampling module (601) comprises:
a selecting submodule (6011), configured to, from a first layer to a last layer of the super network, take out one sub-structure from a sampling pool of each layer in a manner of layer by layer, the taken-out sub-structure being no longer put back into the sampling pool;
a sub-network combining submodule (6012), configured to, connect the sub-structures selected from each layer to form one sub-network; and
a sampling control submodule (6013), configured to control the selecting submodule (6011) and the sub-network combining submodule (6012) to repeat the sampling and forming the sub-network, so as to obtain the plurality of sub-networks.

9. The apparatus for training a super network according to claim 8, further comprising:
a network releasing module (603), configured to, when a number of the sub-networks sampled by the non-putting-back sampling module (601) is as the same as a number of the sub-structures in each layer of the super network, put all the sub-structures of all the layers of the super network back to the corresponding sampling pool of the respective layers.

10. A computer device, comprising:
a processor (920); and
a memory (904) for storing instructions executable by the processor (920);
wherein the processor (920) is configured to perform the method for super network training according to any one of claims 1 to 6.

11. A non-transitory computer readable storage medium having stored thereon instructions that, when executed by a processor of a device, cause the device to perform the method for super network training according to any one of claims 1 to 6.
